# EUROPEAN PATENT APPLICATION

(11) **EP 4 269 349 A1**
(43) Date of publication of application: **01.11.2023**
(21) Application number: 21910744.8
(22) Date of filing: 21.12.2021
(51) Int. Cl.: C01G 23/00, C09C 1/36, C09C 3/06, C09C 3/08, C09D 201/00, C09D 7/62

(54) **COATED FLAKY TITANIC ACID PARTICLES, PRODUCTION METHOD THEREFOR, AND USE THEREOF**

(30) Priority: 23.12.2020 JP 2020213053
(71) Applicant: Ishihara Sangyo Kaisha, Ltd., Osaka-shi, Osaka 550-0002 (JP)
(72) Inventor: KAMANAKA, Kei, Osaka-shi, Osaka 550-0002 (JP); HAMAMOTO, So, Osaka-shi, Osaka 550-0002 (JP)
(74) Representative: Grünecker Patent- und Rechtsanwälte PartG mbB
(86) International application number: PCT/JP2021/047173
(87) International publication number: WO 2022/138601

(57) **Abstract**

Provided are: coated flaky titanic acid particles, which can form a design coating film with a good silky texture and shadowed appearance when flaky titanic acid is applied to an organic solvent-based paint and, which can also sufficiently suppress discoloration (yellowing) of the coating film even in a relatively severe environment, such as prolonged exposure to ultraviolet light; and a production method therefor.

The surface of the flaky titanic acid particles has an oxide and/or hydroxide of aluminum, and an anionic surfactant present thereon. Preferably, the anionic surfactant is a hydrocarbon-based anionic surfactant having 5 or more carbon atoms in the main chain or a fluorinated anionic surfactant having 4 or more carbon atoms. Said production method comprises: a step for maintaining an aqueous slurry, which contains flaky titanic acid particles and an aluminum source, at a temperature of 50-95°C inclusive and at a pH of 5-12 inclusive to treat the surface of the flaky titanic acid particles with an oxide and/or hydroxide of aluminum; and a subsequent step for mixing the obtained flaky titanic acid and an anionic surfactant in a solution.

## Description

### TECHNICAL FIELD

The present invention relates to coated plate-shaped titanate particles, a method for producing the same, and uses thereof.

### BACKGROUND ART

A luster paint that gives designability to a surface of an article is known. As the luster paint, for example, a luster pigment in which a coating layer of titanium oxide is provided on a surface of a scaly substrate such as natural mica, synthetic mica or scaly alumina or the like is used. Such a conventional luster pigment has a strong luster feeling (here, the "luster feeling" means a luster giving a metallic tone.) as well as a particle feeling (here, the "particle feeling" means a design that appears as if each of the particles glitters solely.).

In recent years, as a design that exhibits a so-called silky feeling, which gives a dense luster that is deep and quiet like silk with a reduced particle feeling (In other words, a silk cloth-like seamless and smooth design.), has been proposed. As a luster pigment capable of giving such a silky feeling, plate-shaped titanate is known (for example, "PATENT LITERATURE 1").

The particles of the plate-shaped titanate can be relatively easily applied to a water-based paint because the surfaces thereof are hydrophilic. On the other hand, although it is not easy to apply the particles of the plate-shaped titanate to an organic solvent-based paint, various studies thereon have been made.

For example, "PATENT LITERATURE 2" describes an organic solvent dispersion containing plate-shaped titanate, an organic solvent, and a primary amine having a linear hydrocarbon group having 6 or more carbon atoms. In an organic solvent-based paint using such an organic solvent dispersion, the plate-shaped titanate can be stably dispersed in the paint. Therefore, in the luster paint film formed by using this organic solvent-based paint, not only a silky feeling but also a shading feeling (here, the "shading feeling" means a difference between brightness of highlight and brightness of shade when irradiating the paint film with light) can be sufficiently secured, and a unique design feeling can be created.

### CITATION LIST

### PATENT LITERATURE

PATENT LITERATURE 1: WO 2019/159923 A1
PATENT LITERATURE 2: JP 2020-23419 A

### SUMMARY OF INVENTION

### TECHNICAL PROBLEM

However, the technique described in "PATENT LITERATURE 2" described above has a concern of discoloration (i.e., yellowing) of the paint film due to exposure to ultraviolet light for a long time or the like. If the above-described primary amine is not used, yellowing of the paint film is reduced, but in this case, the dispersion effect of the plate-shaped titanate in the organic solvent is lost, and the shading feeling of the paint comes to be insufficient. In view of such circumstances, when the plate-shaped titanate is applied to an organic solvent-based paint, there has been a demand for a technique capable of more surely achieving both "a silky feeling and a shading feeling" and "reduced discoloration (i.e., yellowing) of a paint film".

### SOLUTION TO PROBLEM

The present inventors have conducted intensive studies in view of the above-described problems of the conventional technique. As a result, as for an organic solvent dispersion, the present inventors have found that dispersion stability of plate-shaped titanate particles in an organic solvent can be sufficiently secured by making an oxide and/or hydroxide of aluminum and a specific surfactant exist on the particle surface of the plate-shaped titanate. Furthermore, the present inventors have found that the above problems can be solved by preparing an organic solvent-based paint using the above organic solvent dispersion and applying the organic solvent-based paint to an object to form a paint film, and have completed the present invention.

That is, the present invention encompasses the following inventions.
(1) Coated plate-shaped titanate particles, wherein an oxide and/or hydroxide of aluminum and an anionic surfactant exist on a particle surface of a plate-shaped titanate.
(2) The coated plate-shaped titanate particles according to (1), wherein the anionic surfactant is a hydrocarbon-based anionic surfactant having 5 or more carbon atoms in a main chain of the hydrocarbon-based anionic surfactant and/or a fluorine-based anionic surfactant having 4 or more carbon atoms in a main chain of the fluorine-based anionic surfactant.
(3) The coated plate-shaped titanate particles according to (1) or (2), wherein the anionic surfactant exists on the oxide and/or hydroxide of aluminum on the particle surface of the plate-shaped titanate.
(4) The coated plate-shaped titanate particles according to any one of (1) to (3), wherein a contained amount of the anionic surfactant is from 0.01% by mass or more to 30% by mass or less with respect to the plate-shaped titanate.
(5) The coated plate-shaped titanate particles according to any one of (1) to (4), wherein the contained amount of the oxide and/or hydroxide of aluminum is from 1% by mass or more to 30% by mass or less in terms of Al₂O₃ conversion with respect to the plate-shaped titanate.
(6) A design pigment comprising the coated plate-shaped titanate particles according to any one of (1) to (5).
(7) An organic solvent dispersion comprising the coated plate-shaped titanate particles according to any one of (1) to (5) and an organic solvent.
(8) A paint composition comprising the coated plate-shaped titanate particles according to any one of (1) to (5) and a resin component.
(9) A plastic composition comprising the coated plate-shaped titanate particles according to any one of (1) to (5) and a resin component.
(10) A method for producing coated plate-shaped titanate particles, comprising a step of mixing, in a solution, a plate-shaped titanate in which an oxide and/or hydroxide of aluminum exists on a particle surface of the plate-shaped titanate with an anionic surfactant.
(11) The method according to (10), wherein a hydrocarbon-based anionic surfactant having 5 or more carbon atoms in a main chain of the hydrocarbon-based anionic surfactant and/or a fluorine-based anionic surfactant having 4 or more carbon atoms in a main chain of the fluorine-based anionic surfactant are used as the anionic surfactant.
(12) The method according to (10) or (11), comprising a step of making the oxide and/or hydroxide of aluminum exist on the particle surface of the plate-shaped titanate, wherein the step includes maintaining a temperature of an aqueous slurry containing particles of the plate-shaped titanate and an aluminum source at a temperature from 50°C or more to 95°C or less, and maintaining the aqueous slurry at a pH from 5 or more to 12 or less.

### ADVANTAGEOUS EFFECTS OF INVENTION

According to the present invention, plate-shaped titanate can be applied to an organic solvent-based paint, and a design paint film with good silky feeling and shading feeling can be realized. Moreover, discoloration (i.e., yellowing) of the paint film is sufficiently reduced even when the paint film is placed under a relatively severe environment such as exposure to ultraviolet light for a long time, and thus the coated plate-shaped titanate particles according to the present invention are useful as plate-shaped titanate particles to be blended in an organic solvent-based automotive paint or plastic.

### DESCRIPTION OF EMBODIMENTS

The coated plate-shaped titanate particles according to the present invention is one in which an oxide and/or hydroxide of aluminum and an anionic surfactant are made to exist on the particle surface of the plate-shaped titanate, and preferably one in which an oxide and/or hydroxide of aluminum and a hydrocarbon-based anionic surfactant having 5 or more carbon atoms in a main chain of the hydrocarbon-based anionic surfactant and/or a fluorine-based anionic surfactant having 4 or more carbon atoms in a main chain of the fluorine-based anionic surfactant are made to exist on the particle surface of the plate-shaped titanate. Here, the meaning of "exist on the particle surface" of an oxide and/or hydroxide of aluminum and an anionic surfactant are made to exist on the particle surface of the plate-shaped titanate, described above is that the oxide and/or hydroxide of aluminum and the anionic surfactant exist on the particle surface of the plate-shaped titanate by coating the particle surface of the plate-shaped titanate, adhering to or adsorbing on the particle surface of the plate-shaped titanate, or reacting with the particle surface of the plate-shaped titanate. The above oxide and/or hydroxide of aluminum and the above anionic surfactant may coat the entire particle surface of the plate-shaped titanate, or may exist on at least a part of the particle surface of the plate-shaped titanate. In the present application, according to the above definition, the particles in which an oxide and/or hydroxide of aluminum and an anionic surfactant exist on the particle surface of the plate-shaped titanate are referred to as coated plate-shaped titanate particles, and are distinguished from the plate-shaped titanate particles (that is, the particles of the plate-shaped titanate before the oxide and/or hydroxide of aluminum and the anionic surfactant are made to exist on the particle surface of the plate-shaped titanate) constituting the coated plate-shaped titanate particles.

The coated plate-shaped titanate particles according to the present invention and the plate-shaped titanate particles constituting the coated plate-shaped titanate particle have a "plate shape". The "plate shape" is a concept including shapes which are referred to as a flaky shape, a sheet shape, a flake shape, a scale shape, and the like, and means a shape having a relatively large ratio of width and length to thickness.

The "titanate" means a compound composed of "Ti" atom, "O" atom, and "H" atom, and may contain impurities derived from a method for producing titanate or various trace elements (for example, Li, Na, K, Rb, Cs, and the like). The plate-shaped titanate can have various crystal structures, and is preferably a titanate having a layered crystal structure. There are various layered crystal structures, and for example, a titanate having a lepidocrocite structure obtained by forming sheets in which TiO₆ octahedrons share edges to spread two-dimensionally in an a-axis direction and a c-axis direction, making cations therebetween included, and laminating the sheets including the cations can be used. The crystal structure of titanate can be confirmed by X-ray powder diffraction.

The plate-shaped titanate particles have a median diameter (D50) in a volume particle size distribution measured by a laser diffraction/scattering method preferably in a range from 10 µm or more to 40 µm or less, and more preferably in a range from 15 µm or more to 30 µm or less. This makes it easier to obtain a paint film exhibiting good shading feeling and silky feeling. The plate-shaped titanate particles have a cumulative 10% particle size (D10) in a volume particle size distribution measured by a laser diffraction/scattering method of preferably 5 µm or more, and more preferably 10 µm or more. In this way, the abundance ratio of the fine particles can be sufficiently lowered, and a decrease in the shading feeling of the paint film can be reduced.

The plate-shaped titanate particles have a cumulative 90% particle size (D90) in a volume particle size distribution measured by a laser diffraction/scattering method of preferably 70 µm or less, and more preferably 60 µm or less. In this way, the abundance ratio of the coarse particles can be sufficiently lowered, and development of the particle feeling of the paint film can be reduced. Measurement of the particle size distribution of the plate-shaped titanate by a laser diffraction/scattering method is performed by using a laser diffraction/scattering type particle size distribution measuring analyzer (specifically, "LA-950" manufactured by HORIBA, Ltd.) and setting a refractive index to 2.50.

The average thickness of the plate-shaped titanate particles is preferably set to a range from 0.05 µm or more to 0.4 µm or less, and more preferably a range from 0.05 µm or more to 0.3 µm or less. The average thickness is obtained by preparing a paint film containing plate-shaped titanate particles, cutting the paint film with a microtome, observing the cross section with an electron microscope, and averaging the values obtained by measuring the thicknesses of 50 or more randomly selected particles.

The coated plate-shaped titanate particles according to the present invention have an oxide and/or hydroxide of aluminum on the particle surface of the plate-shaped titanate. The oxide and/or hydroxide of aluminum may coat the particle surface of the plate-shaped titanate, or may be scattered in an island shape on the particle surface of the plate-shaped titanate. The oxide of aluminum may be referred to as alumina. The hydroxide of aluminum includes those which are referred to as alumina hydrate, hydrous alumina, and the like. Examples of the crystal structure of the hydroxide of aluminum include boehmite, gibbsite, pseudoboehmite, bayerite, and the like. In the hydroxide of aluminum, a plurality of kinds of hydroxides of aluminum having the above different crystal structures may be mixed. Of course, an oxide and hydroxide of aluminum may be mixed therein. The crystal structure of aluminum can be confirmed by X-ray powder diffraction. It is understood that the oxide and/or hydroxide of aluminum functions as a scaffold for adsorption of the anionic surfactant to the particle surface of the plate-shaped titanate.

The contained amount of the oxide and/or hydroxide of aluminum is preferably from 1% by mass or more to 30% by mass or less in terms of Al₂O₃ conversion with respect to the plate-shaped titanate. The contained amount of 1% by mass or more is preferable from the viewpoint that the anionic surfactant can be adsorbed in the sufficient amount to the particle surface of the plate-shaped titanate via the oxide and/or hydroxide of aluminum. When the contained amount of the oxide and/or hydroxide of aluminum is increased, the anionic surfactant is more easily adsorbed, but when the contained amount exceeds a certain amount (specifically, about 30% by mass), the effect (specifically, improvement in dispersibility of the coated plate-shaped titanate particles in an organic solvent) reaches a ceiling, and thus the contained amount is preferably 30% by mass or less from the viewpoint of efficient contained amount. The contained amount of the oxide and/or hydroxide of aluminum is more preferably from 3% by mass or more to 25% by mass or less, and still more preferably from 5% by mass or more to 20% by mass or less, in terms of Al₂O₃ conversion with respect to the plate-shaped titanate.

In the coated plate-shaped titanate particles according to the present invention, an anionic surfactant exists on the particle surface of the plate-shaped titanate in addition to the oxide and/or hydroxide of aluminum, and more preferably, a hydrocarbon-based anionic surfactant having 5 or more carbon atoms in a main chain of the hydrocarbon-based anionic surfactant and/or a fluorine-based anionic surfactant having 4 or more carbon atoms in a main chain of the fluorine-based anionic surfactant exist. The anionic surfactant is a surfactant having an anionic hydrophilic group, and it is understood that the anionic hydrophilic group acts on a basic site of the oxide and/or hydroxide of aluminum, and is adsorbed or reacted, whereby the anionic surfactant exists on the particle surface of the plate-shaped titanate via the oxide and/or hydroxide of aluminum. In this state, the anionic surfactant exists on the oxide and/or hydroxide of aluminum on the particle surface of the plate-shaped titanate. In addition, some anionic surfactants may directly exist on the particle surface of the plate-shaped titanate by being adsorbed to or reacted with the particle surface of the plate-shaped titanate. It is understood that a hydrophobic group (for example, a hydrocarbon group or a fluoroalkyl group) of the anionic surfactant increases affinity with the organic solvent, thereby improving the dispersibility of the coated plate-shaped titanate particles in the organic solvent.

The anionic surfactant is not particularly limited as long as it can act on the basic site of the oxide and/or hydroxide of aluminum. As such an anionic surfactant, anionic surfactants such as carboxylic acid type, sulfonic acid type, sulfuric acid ester type, and phosphoric acid ester type surfactants can be used according to the chemical structure of the portion exhibiting hydrophilicity (i.e., hydrophilic group). On the other hand, according to the hydrophobic group of the anionic surfactant, the anionic surfactants can be classified into hydrocarbon-based anionic surfactants having a hydrocarbon group and fluorine-based anionic surfactants having a fluoroalkyl group.

The hydrocarbon-based anionic surfactant preferably has 5 or more carbon atoms in a main chain (i.e., a portion corresponding to a stem having the largest carbon number) of its molecular structure. The main chain is basically composed of carbon atoms, but atoms other than carbon (specifically, oxygen atom, nitrogen atom, sulfur atom, and the like) may be contained in the main chain. In addition, a double bond between carbon atoms may be contained in the middle of the main chain, or a benzene ring may be contained. Of course, a side chain (i.e., a portion corresponding to a branch having a carbon number smaller than that of the main chain) may exist on the main chain, but it is more preferable that the side chain does not exist (that is, it is more preferable that the main chain is linear). In the main chain of the hydrocarbon-based anionic surfactant, the carbon number is more preferably 8 or more, and still more preferably 12 or more. In this way, the affinity of the plate-shaped titanate with the organic solvent is further increased, and the dispersibility of the coated plate-shaped titanate particles in the organic solvent is further improved. On the other hand, in the main chain of the hydrocarbon-based anionic surfactant, the number of carbon atoms is preferably 20 or less, and more preferably 18 or less.

Specifically, the following compounds can be used as the hydrocarbon-based anionic surfactant. The hydrocarbon-based anionic surfactant can be also used singly or in combination of two or more kinds thereof.

### (1) Carboxylic acid type

Caproic acid, heptanoic acid, caprylic acid, pelargonic acid, capric acid, undecylic acid, lauric acid, tridecylic acid, myristic acid, pentadecylic acid, palmitic acid, margaric acid, stearic acid, oleic acid, and sodium or potassium salts thereof, and the like.

### (2) Sulfonic acid type

Sodium hexanesulfonate, sodium heptyl sulfonate, sodium octyl sulfonate, sodium noryl sulfonate, sodium decyl sulfonate, sodium undecyl sulfonate, sodium lauryl sulfonate, sodium tridecyl sulfonate, sodium myristyl sulfonate, sodium pentasulfonate, sodium cetyl sulfonate, sodium heptadecyl sulfonate, sodium stearyl sulfonate, dodecylbenzenesulfonate, sodium dodecylbenzenesulfonate, and potassium salts thereof, disodium laureth sulfosuccinate, sodium diethylhexyl sulfosuccinate, and the like.

### (3) Sulfuric acid ester type

Sodium hexyl sulfate, sodium heptyl sulfate, sodium octyl sulfate, sodium noryl sulfate, sodium decyl sulfate, sodium undecyl sulfate, sodium lauryl sulfate, sodium tridecyl sulfate, sodium myristyl sulfate, sodium pentadecyl sulfate, sodium cetyl sulfate, sodium heptadecyl sulfate, sodium stearyl sulfate, sodium polyoxyethylene lauryl ether sulfate, sodium polyoxyethylene tridecyl ether sulfate, sodium polyoxyethylene myristyl ether sulfate, sodium polyoxyethylene pentadecyl ether sulfate, sodium polyoxyethylene cetyl ether sulfate, sodium polyoxyethylene heptadecyl ether sulfate, sodium polyoxyethylene cetyl ether sulfate, sodium polyoxyethylene stearyl ether sulfate, sodium polyoxyethylene oleyl ether sulfate, and potassium salts thereof, ammonium lauryl sulfate, ammonium laureth sulfate, and the like.

### (4) Phosphate ester type

Hexyl phosphoric acid, heptyl phosphoric acid, octyl phosphoric acid, noryl phosphoric acid, decyl phosphoric acid, isodecyl phosphoric acid, undecyl phosphoric acid, lauryl phosphoric acid, tridecyl phosphoric acid, myristyl phosphoric acid, pentadecyl phosphoric acid, cetyl phosphoric acid, heptadecyl phosphoric acid, stearyl phosphoric acid, oleyl phosphoric acid, and sodium or potassium salts thereof, 2-ethylhexyl acid phosphate, isodecyl acid phosphate, isotridecyl acid phosphate, isostearyl acid phosphate, lauryl acid phosphate, myristyl acid phosphate, cetyl acid phosphate, stearyl acid phosphate, oleyl acid phosphate, tetracosyl acid phosphate, bis(2-ethylhexyl) phosphate, polyoxyethylene lauryl ether phosphoric acid, polyoxyethylene tridecyl ether phosphoric acid, polyoxyethylene myristyl ether phosphoric acid, polyoxyethylene pentadecyl ether phosphoric acid, polyoxyethylene cetyl ether phosphoric acid, polyoxyethylene heptadecyl ether phosphoric acid, polyoxyethylene cetyl ether phosphoric acid, polyoxyethylene stearyl ether phosphoric acid, polyoxyethylene oleyl ether phosphoric acid, and sodium or potassium salts thereof, and the like.

The contained amount of the hydrocarbon-based anionic surfactant is preferably from 0.01% by mass or more to 30% by mass or less, more preferably from 0.5% by mass or more to 30% by mass or less, and still more preferably from 5% by mass or more to 25% by mass or less with respect to the plate-shaped titanate. In the case of being such a contained amount, the sufficient amount of the anionic surfactant (specifically, hydrocarbon chain of the anionic surfactant) can be made to exist on the particle surface of the plate-shaped titanate. As a result, the coated plate-shaped titanate particles in which such an anionic surfactant exists on the particle surface of the plate-shaped titanate are well dispersed in the organic solvent or an organic solvent-based paint, and good silky feeling and shading feeling can be realized.

The fluorine-based anionic surfactant is an anionic surfactant having a fluoroalkyl group in which a hydrogen atom in an alkyl chain is substituted with a fluorine atom. The number of fluorine substitutions in the fluoroalkyl group is not particularly limited, but a perfluoroalkyl group in which all hydrogen atoms are substituted with fluorine is preferable. Of course, a side chain (i.e., a portion corresponding to a branch having a carbon number smaller than that of the main chain) may exist on the main chain, but it is more preferable that the side chain does not exist (that is, it is more preferable that the main chain is linear). The fluorine-based anionic surfactant has preferably 4 or more carbon atoms, and more preferably 6 or more carbon atoms. In this way, the affinity of the plate-shaped titanate with the organic solvent is further increased, and the dispersibility of the coated plate-shaped titanate particles in the organic solvent is further improved. On the other hand, the carbon number of the fluorine-based anionic surfactant is preferably 8 or less.

Specifically, the following compounds can be used as the fluorine-based anionic surfactant. The fluorine-based anionic surfactant can be also used singly or in combination of two or more kinds thereof. It can be also used in combination with the above hydrocarbon-based anionic surfactant.

### (1) Carboxylic acid type

Perfluorobutanoic acid, perfluoropentanoic acid, perfluorohexanoic acid, perfluorooctanoic acid, perfluorononanoic acid, perfluorolauric acid, and sodium or potassium salts thereof, and the like.

### (2) Sulfonic acid type

Perfluorobutanesulfonic acid, perfluoropentanesulfonic acid, perfluorohexanesulfonic acid, perfluorooctanesulfonic acid, perfluorononanesulfonic acid, perfluorolaurine sulfonic acid, and lithium, sodium or potassium salts thereof, and the like.

### (3) Phosphate ester type

Perfluorohexyl phosphoric acid, perfluorooctyl phosphoric acid, perfluorolauryl phosphoric acid, and sodium or potassium salts thereof, 2-(perfluorohexyl)ethyl phosphate ester diethanolamine salt, and the like.

The contained amount of the above fluorine-based anionic surfactant is preferably from 0.01% by mass or more to 30% by mass or less, and more preferably from 0.05% by mass or more to 10% by mass or less with respect to the plate-shaped titanate. In the case of being such a contained amount, the sufficient amount of the anionic surfactant (specifically, fluoroalkyl group of the anionic surfactant) can be made to exist on the particle surface of the plate-shaped titanate. As a result, the coated plate-shaped titanate particles in which such an anionic surfactant exists on the particle surface of the plate-shaped titanate are well dispersed in the organic solvent or an organic solvent-based paint, and good silky feeling and shading feeling can be realized.

The coated plate-shaped titanate particles according to the present invention as described above can be used as a design pigment, and by forming a paint film by blending the coated plate-shaped titanate particles in a paint, a design paint film with good silky feeling and shading feeling can be realized. Moreover, since discoloration (i.e., yellowing) of the paint film can be sufficiently reduced even when the paint film is placed under a relatively severe environment such as exposure to ultraviolet light for a long time, the paint film can withstand long-term use outdoors. In addition, the coated plate-shaped titanate particles according to the present invention can be used as a filler, and in particular, a protective layer on an object surface can be formed using a plate-shaped shape.

The coated plate-shaped titanate particles according to the present invention can be mixed with an organic solvent to form an organic solvent dispersion. For the mixing, an ordinary stirrer, a disperser such as a colloid mill, a ball mill, or a bead mill, a shaking apparatus, a paint conditioner, a paint shaker, a dispersion mixer, or the like can be used.

The organic solvent can be appropriately selected according to the application. Examples of the organic solvent include the following:
alcohol-based solvents (specifically, ethanol, isopropyl alcohol, 2-butanol, glycerin, ethylene glycol, propylene glycol, and the like);
ester-based solvents (specifically, ethyl acetate, propyl acetate, glycerin fatty acid ester, and the like);
polyether-based solvents (specifically, polyethylene glycol, polytetramethylene oxide, and the like),
carboxylic acid-based solvents (specifically, acetic acid, propionic acid, lauric acid, stearic acid, lactic acid, and the like);
hydrocarbon-based solvents (specifically, hexane, heptane, octane, decane, liquid paraffin, and the like);
aromatic hydrocarbon-based solvents (specifically, benzene, toluene, xylene, naphthalene, and the like);
amide-based solvents (specifically, dimethyl sulfoxide, acetanilide, and the like);
ketone-based solvents (specifically, acetone, diethyl ketone, methyl isobutyl ketone, cyclohexanone, and the like);
halogen-based solvents (specifically, methylene chloride, chloroform, tetrachloroethylene, and the like); and
carbonate-based solvents (specifically, ethylene carbonate, propylene carbonate, dimethyl carbonate, diethyl carbonate, and the like).

In addition, examples thereof include acetonitrile, mineral spirit, light oil, kerosene, crude oil, salad oil, soybean oil, castor oil, fluorine-modified oil, lacquer thinner, and the like. These can be used alone, or two or more kinds thereof can be also used in combination. In addition, the organic compound may be an organic compound containing a reactive functional group such as methyl acrylate or methyl methacrylate.

In the organic solvent dispersion according to the present invention, the contained amount of the coated plate-shaped titanate particles can be appropriately set, and is preferably the level from 1% by mass or more to 50% by mass or less, and more preferably the level from 5% by mass or more to 40% by mass or less.

The organic solvent dispersion according to the present invention may contain, in addition to the coated plate-shaped titanate particles and the organic solvent, various additives such as a dispersant, a surface control agent (e.g., leveling agent, wettability improver), a defoamer, a colorant, an extender, an antifungal agent, a curing aid, a thickener, and an antisettling agent, a filler, and the like as a third component as long as the effect of the present invention is not inhibited.

Examples of the dispersant include the following:
(1) surfactants (specifically, (a) anionic-based surfactants (specifically, carboxylate, carboxylic acid ester salt, sulfuric acid ester salt, sulfonate, phosphate, phosphoric acid ester salt, and the like), (b) cationic-based surfactants (specifically, alkylamine salt, alkylamine type, and the like), (c) nonionic-based surfactants (specifically, ether type, alcohol ester type, ether ester type, ester type, nitrogen-containing type, and the like), and the like);
(2) silicone-based dispersants (specifically, alkyl-modified polysiloxane, polyoxyalkylene-modified polysiloxane, and the like);
   and the like.

The surface control agent controls the surface tension of the organic solvent dispersion to prevent defects such as cissing and craters, and the surface control agent includes acrylic surface control agents, vinyl-based surface control agents, silicone-based surface control agents, fluorine-based surface control agents, and the like. The additive amount of the third component can be appropriately adjusted. For example, when the above surfactants or the above silicone-based dispersants are used as the dispersant, the additive amount thereof is preferably the level from 0.005% by mass or more to 5.0% by mass or less, and more preferably the level from 0.01% by mass or more to 2.0% by mass or less with respect to the mass of the coated plate-shaped titanate particles. As the surface control agent, the above silicone-based surface control agent or the like can be used, and the additive amount thereof is preferably the level from 0.005% by mass or more to 5.0% by mass or less, and more preferably the level from 0.01% by mass or more to 2.0% by mass or less with respect to the mass of the coated plate-shaped titanate particles.

The paint composition according to the present invention contains one which is generally referred to as an ink composition in addition to the paint composition, and contains the coated plate-shaped titanate particles described above and a resin component. Specifically, the resin component can appropriately use the following:
(1) Inorganic resin (specifically, (a) polymerizable silicon compound (specifically, hydrolyzable silane or a hydrolysis product thereof or a partial condensate thereof, organopolysiloxane, or the like), (b) metal alkoxide, or the like); and
(2) Organic resin (specifically, alkyd-based resin, acrylic resin, polyester-based resin, epoxy-based resin, amino-based resin, fluorine-based resin, modified silicone-based resin, urethane-based resin, vinyl-based resin, or the like).

These resin components are of an organic solvent soluble type resins, a non-aqueous dispersion (NAD) type resins, and the like, and are not particularly limited, and curing methods are also of a heat curing type, a room temperature curing type, an ultraviolet curing type, an electron beam curing type, and the like, and are not limited. In the paint composition, the content of the coated plate-shaped titanate particles can be appropriately set, and the contained amount of the coated plate-shaped titanate particles in the paint composition is preferably the level from 1% by mass or more to 50% by mass or less, and more preferably the level from 5% by mass or more to 40% by mass or less.

In addition to the coated plate-shaped titanate particles and the resin component, the paint composition according to the present invention may contain the above organic solvent, and may further contain, in accordance to the purpose, the following: a colorant such as an organic pigment, an inorganic pigment, or a dye; various additives such as an extender, a surfactant, a plasticizer, a curing aid, a desiccant, a defoamer, a thickener, an emulsifier, a flow adjustor, an anti-skinning agent, a color separation preventive agent, an ultraviolet absorber, and an antifungal agent; a filler; and the like. These raw materials can be prepared in a known prescription to form a paint composition. Further, a curing agent, a curing aid, and a curable resin component can be separately used as a curing liquid, and can be mixed at the time of painting to form a two-component paint.

By applying the paint composition according to the present invention to an object to be painted by a known method, a paint film exhibiting good silky feeling and shading feeling and further excellent yellowing resistance can be obtained. Specifically, general methods such as spin coating, spray coating, roller coating, dip coating, flow coating, knife coating, electrostatic coating, bar coating, die coating, brush coating, and a method of dropping droplets can be used without limitation. A tool used for applying the paint composition can be appropriately selected from known tools such as a spray gun, a roller, a brush, a bar coater, and a doctor blade.

The plastic composition according to the present invention contains the coated plate-shaped titanate particles according to the present invention described above and a resin component. Examples of the resin component include those described below, but the resin component is not particularly limited to them. Furthermore, for the purpose of improving physical properties such as impact resistance, scratch resistance, chemical resistance, and fluidity, two or more kinds of the following resin components can be also used in combination.

Examples of the resin component used in the plastic composition include the following:
(1) general-purpose plastic resins (specifically, (a) polyolefin resins (specifically, polyethylene, polypropylene, and the like), (b) polyvinyl chloride resins, (c) acrylonitrile butadiene styrene resins, (d) polystyrene resins, (e) methacrylic resins, (f) polyvinylidene chloride resins, and the like),
(2) engineering plastics (specifically, (a) polycarbonate resins, (b) polyethylene terephthalate resins, (c) polyamide resins, (d) polyacetal resins, (e) modified polyphenylene ethers, (f) fluororesin, and the like),
(3) super engineering plastics (specifically, (a) polyphenylene sulfide resins (PPS), (b) polysulfone resins (PSF), (c) polyether sulfone resins (PES), (d) amorphous polyarylate resins (PAR), (e) liquid crystal polymers (LCP), (f) polyether ether ketone resins (PEEK), (g) polyamideimide resins (PAI), and (h) polyetherimide resins (PEI)),
   and the like.

The blending ratio of the coated plate-shaped titanate particles and the resin component is not particularly limited, but the blending ratio of the coated plate-shaped titanate particles is usually preferably from 1 part by mass or more to 80 parts by mass or less, and still more preferably from 1 part by mass or more to 60 parts by mass or less with respect to 100 parts by mass of the resin component, and in the case of a masterbatch, the blending ratio is preferably from 10 parts by mass or more to 900 parts by mass or less, and still more preferably from 50 parts by mass or more to 500 parts by mass or less with respect to 100 parts by mass of the resin component. In addition, according to the uses, various additives such as a reinforcing material such as glass fibers known to those skilled in the art, a stabilizer, a dispersant, a lubricant, an antioxidant, an ultraviolet absorber, and a filler may be added thereto.

These plastic compositions are obtained by blending the coated plate-shaped titanate particles into a molten resin component by means of a kneader machine. The kneader machine may be one generally used, and examples thereof include a single screw extruder, a twin screw extruder, an intensive mixer such a Banbury mixer, a roll molding machine, and the like.

The plastic composition blending the coated plate-shaped titanate particle, obtained by the kneader machine can be molded by a known method. In particular, when molding is performed by using a method for applying such a load as the coated plate-shaped titanate particles in the resin are oriented, designability caused by the coated plate-shaped titanate particles can be enhanced. Examples of such a molding method include a blow molding and a compression molding. Also, the molded article may be heated and stretched. By using this method as well, similarly, the designability caused by the coated plate-shaped titanate particles can be enhanced.

Hereinafter, a method for producing the coated plate-shaped titanate particles according to the present invention will be described. The coated plate-shaped titanate particles according to the present invention are produced by making an oxide and/or hydroxide of aluminum exist on the particle surface of the plate-shaped titanate and further performing the treatment with an anionic surfactant. As the plate-shaped titanate of a raw material, for example, one produced according to the following methods can be used.

### (Production of plate-shaped titanate particles)

First, metal titanate powders are produced. The metal titanate powders use, as raw materials, a carbonate or hydroxide of an alkali metal such as lithium, sodium, potassium, rubidium, or cesium, and titanium oxide. As the carbonate or hydroxide of the alkali metal, carbonates or hydroxides of two different alkali metals (here, the two different alkaline metals are expressed as "M" and "M'") are used. The carbonates or hydroxides of the two different alkali metals (M and M') and titanium oxide are preferably mixed at a molar ratio of M/M7Ti of 3/1/5 to 3/1/11, and calcined at the temperature of the level from 1050°C or more to 1200°C or less. The other calcination conditions, for example, a temperature increase/decrease speed, a calcination time, a calcination atmosphere, and the like are not particularly limited, and may be appropriately set. Further, if necessary, the resultant obtained by the above calcination of the carbonates or hydroxides of the two different alkali metals (M and M') and the titanium oxide is crushed to obtain the titanate metal salt powders.

The obtained titanate mixed alkali metal salt powders are preferably a compound having an orthorhombic layered structure (i.e., lepidocrocite type crystal structure) represented by composition formula Mₓ[M'_{x/3}Ti_{2-x/3}]O₄ (wherein "M" and "M'" are different alkali metals, and "x" is from 0.50 to 1.0) in which a part of Ti⁴⁺ seats in the host skeleton is substituted with an alkali metal ion different from the alkali metal between the layers of the compound. The value of"x" in the composition formula can be controlled by changing the mixing ratio of starting materials.

Next, the metal titanate powders are suspended in an aqueous solvent, an acid solution is then added thereto, and metal ions are extracted (which means an ion exchange between the metal ions in the metal titanate and the cations in the acid) to generate layered titanate. As the acid aqueous solution, an aqueous solution of an inorganic acid such as hydrochloric acid or sulfuric acid, or an organic acid such as acetic acid or oxalic acid can be used.

As the above layered titanate, a compound having an orthorhombic layered structure represented by composition formula H_{4x/3}Ti_{2-x/3}O₄ · nH₂O (wherein "x" is 0.50 to 1.0 and "n" is 0 to 2) in which metal ions between the layers of the compound are substituted with hydrogen ions and a part of Ti⁴⁺ seats in the host skeleton is also substituted is preferable. It is not necessary that all the metal ions are substituted with hydrogen ions, and the metal ions may remain as long as the effect of the present invention can be obtained.

Next, the layered titanate and an aqueous solution (i.e., a solution containing water as a main component) are mixed to prepare a slurry, and a water-soluble basic organic compound is mixed therewith. In the present invention, the term "water-soluble" means a property of dissolving 10 g or more in 100 g of water. Through the above mixing step, the basic organic compound is inserted between the layers by an exchange reaction between the hydrogen ion contained in the layered titanate and the basic organic compound, and at least a part of the layer is swollen and/or peeled off to obtain plate-shaped titanate particles.

The water-soluble basic organic compound is not particularly limited, and any one of basic organic compounds or any two or more kinds of basic organic compounds can be appropriately selected and used. Specific examples thereof include the following:
(1) quaternary ammonium hydroxide compounds (specifically, tetramethylammonium hydroxide, tetraethylammonium hydroxide, tetrapropylammonium hydroxide, tetrabutylammonium hydroxide, and the like), (2) amine compounds having an alkyl group having 5 or less carbon atoms (specifically, propylamine, diethylamine, and the like), (3) alkanolamine compounds (specifically, ethanolamine, aminomethylpropanol, and the like), and the like. Among them, an alkanolamine compound is preferable, and it is more preferable to use aminomethylpropanol.

The degree of peeling of the layered titanate can be controlled by appropriately setting conditions such as the following: the kind of the basic organic compound to be used and its amount; the slurry concentration of the layered titanate; the temperature and pH of the slurry when bringing both of the layered titanate and the basic organic compound into contact; and the mixing speed and time. Thus, the thickness of the obtained plate-shaped titanate particles can be controlled to a desired thickness.

The slurry in which the plate-shaped titanate particles obtained in the manner as described above are dispersed (i.e., the plate-shaped titanate slurry) can be subjected to solid-liquid separation by a known method, further washed as necessary, and dried. For example, the plate-shaped titanate slurry can be centrifuged to separate a precipitation and a solution, and dried to obtain its solid content. Alternatively, the plate-shaped titanate slurry can be spray-dried to obtain its solid content. Furthermore, its solid content can be also obtained by combining a plurality of known solid content separation and washing methods.

The obtained solid content can be ground as necessary. The known grinders described above can be used for grinding the obtained solid content. From the viewpoint of maintaining the shape (specifically, dimensions and size of the flake surface) of the plate-shaped titanate particles, a grinder having a weak grinding force is preferable. Examples of such a grinder include a hammer mill and a pin mill.

### (Hydrous alumina treatment)

Hydroxide of aluminum (i.e., hydrous alumina) is made to exist on the particle surface of the plate-shaped titanate. Such a treatment can be performed in an aqueous solution. For example, a slurry in which plate-shaped titanate particles are dispersed in an aqueous solution (that is, a plate-shaped titanate aqueous slurry) is prepared, and an aluminum compound (i.e., aluminum source) as a raw material is added to the slurry. Further, by adjusting the pH of the slurry, the hydroxide of aluminum (i.e., hydrous alumina) can be precipitated from the aluminum source to be made to exist on the particle surface of the plate-shaped titanate.

As the aluminum source as a raw material, one that precipitates the hydroxide of aluminum (i.e., hydrous alumina) by neutralization can be used, and for example, sodium aluminate, aluminum sulfate, or the like can be used. The additive amount of the aluminum source is preferably from 1% by mass or more to 30% by mass or less, more preferably from 3% by mass or more to 25% by mass or less, and still more preferably from 5% by mass or more to 20% by mass or less in terms of Al₂O₃ conversion.

Also, the pH of the aqueous slurry for neutralizing the aluminum source is preferably in the range from 5 or more to 12 or less, and more preferably in the range from 6 or more to 9 or less. For adjusting the pH of the slurry, various acids and bases can be used. For example, when sodium aluminate is used as the aluminum source, sulfuric acid, hydrochloric acid, or the like can be used. Also, when aluminum sulfate is used as the aluminum source, sodium hydroxide, ammonia water, or the like can be used.

In neutralizing the aluminum source, the order of addition of the aluminum source and the acid or base is not particularly limited. For example, an aluminum compound may be added in advance to the plate-shaped titanate aqueous slurry, and an acid or base may be added thereto to adjust the pH of the slurry. Alternatively, the pH of the slurry may be maintained at a predetermined value while simultaneously adding an aluminum source and an acid or base to the plate-shaped titanate slurry.

The temperature of the slurry in neutralizing the aluminum source is preferably maintained at the temperature from 50°C or more to 95°C or less, and more preferably maintained at the temperature from 70°C or more to 90°C or less. By maintaining the temperature in such a range, the particle surface of the plate-shaped titanate can be more densely treated (i.e., coated) with the hydroxide of aluminum (i.e., hydrous alumina). As a result, the anionic surfactant comes to be easily adsorbed on the particle surface of the plate-shaped titanate after the treatment (i.e., coating) of the hydroxide of aluminum (i.e., hydrous alumina) in the above, which is preferable. The temperature of the slurry is preferably raised to the predetermined temperature before the neutralization of the aluminum source is started. Further, even after the neutralization of the aluminum source is completed, the aluminum source may be left (i.e., aged) for the time from several minutes to several hours while maintaining the predetermined temperature.

The slurry after the treatment as described above is performed is subjected to solid-liquid separation by a known method as necessary, and further dried and calcined as necessary. As a method for simultaneously performing solid-liquid separation and drying, spray drying can be used. The hydroxide of aluminum (i.e., hydrous alumina) changes to an oxide of aluminum (i.e., alumina) according to each temperature of the drying and the calcination. For example, when the drying temperature is set to the level of 200°C, a part of hydroxide of aluminum (i.e., hydrous alumina) is changed to oxide (specifically, alumina), so that the mixing state of the oxide of aluminum and the hydroxide of aluminum is formed. Also, when the calcination is performed at a higher temperature (for example, 300°C or more), most of hydroxide of aluminum (i.e., hydrous alumina) changes to oxide (specifically, alumina).

### (Treatment with anionic surfactant)

The plate-shaped titanate particles treated with the oxide and/or hydroxide of aluminum are treated with the above-described anionic surfactant. Such a treatment operation can be also performed in a solution. For example, a plate-shaped titanate having the oxide and/or hydroxide of aluminum on the particle surface (that is, the oxide and/or hydroxide of aluminum exists on the particle surface) and an anionic surfactant are mixed in a solution. Preferably, the plate-shaped titanate having the above oxide and/or hydroxide of aluminum on the particle surface and the hydrocarbon-based anionic surfactant having 5 or more carbon atoms in the main chain thereof and/or the fluorine-based anionic surfactant having 4 or more carbon atoms in the main chain thereof are mixed in a solution. An anionic surfactant may be added to the above plate-shaped titanate slurry (that is, the slurry in which plate-shaped titanate particles having a particle surface treated with an oxide and/or hydroxide of aluminum are dispersed) and mixed for a predetermined time, or the plate-shaped titanate particles or the plate-shaped titanate slurry may be added to a solution of the anionic surfactant and mixed for a predetermined time to form a slurry. As the solvent, water or a mixed solvent of water and an organic solvent can be used. Some anionic surfactants are not readily soluble in water. In such a case, a mixed solution of an organic solvent such as ethanol and water can be used as the solvent.

As the hydrocarbon-based anionic surfactant used in such a treatment, a carboxylic acid type, a sulfonic acid type surfactants, a sulfuric acid ester type surfactants, a phosphoric acid ester type surfactants or the like can be used, and as the fluorine-based anionic surfactant, a carboxylic acid type surfactants, a sulfonic acid type surfactants, a phosphoric acid ester type surfactants or the like can be used, as described above. The additive amount of the anionic surfactant is preferably from 0.01% by mass or more to 30% by mass or less, preferably from 0.5% by mass or more to 30% by mass or less, and still more preferably from 5% by mass or more to 25% by mass or less with respect to the plate-shaped titanate.

The temperature of the slurry when being treated with the anionic surfactant may be room temperature (specifically, the temperature from 10 °C to 30°C), may be the temperature of the above hydrous alumina treatment, or may be heated (specifically, the heating temperature from 30 °C to 95°C). The anionic surfactant can be sufficiently adsorbed or reacted on the particle surface of the plate-shaped titanate treated with the oxide and/or hydroxide of aluminum even when the above treatment is performed under any condition of room temperature or heating. The mixing time of the slurry can be appropriately set within a range from several minutes to several hours.

As described above, the plate-shaped titanate particles whose particle surfaces have been treated with the oxide and/or hydroxide of aluminum and further treated with the anionic surfactant may be subjected to centrifugal separation or solid-liquid separation as necessary, and can be appropriately washed and dried by a known method as necessary. Thus, the coated plate-shaped titanate particles according to the present invention can be obtained.

### EXAMPLES

The present invention will be described in more detail with reference to the following examples and comparative examples, but the present invention is not limited to the examples.

### (Production of plate-shaped titanate particles)

Plate-shaped titanate particles used in the examples and the comparative examples were produced as follows.

### (Production Example 1)

Titanium oxide (specifically, "titanium oxide A-100" manufactured by Ishihara Sangyo Kaisha, Ltd.), potassium carbonate and lithium carbonate (of which both are manufactured by KANTO CHEMICAL CO., INC.) were sufficiently mixed in an agate mortar at a mass ratio of 100:40:9.2, and then fired in the air at 1150°C for 5 hours to synthesize lithium potassium titanate having an orthorhombic lepidocrocite structure (K_{0.8}Li_{0.27}Ti_{1.73}O₄). The obtained lithium potassium titanate was ground in an agate mortar to obtain lithium potassium titanate powders.

The obtained lithium potassium titanate powders and a 1.1 N sulfuric acid aqueous solution having mass that is 4 times as much as the mass of the obtained lithium potassium titanate powders were mixed and stirred for 30 minutes to perform an ion exchange, thereby obtaining a solid of layered titanate. The obtained layered titanate solid was filtered and washed to obtain a layered titanate cake.

The obtained layered titanate cake was dispersed again in pure water so as to be 8.5% by mass in terms of TiO₂ conversion to obtain a layered titanate dispersion. The layered titanate dispersion and ammonia water were mixed to adjust the pH thereof to 8.7, subsequently, per 100 g of TiO₂, 21.4 g of a 90% by mass aqueous solution of 2-amino-2-methyl-1-propanol (i.e., the amount of the aqueous solution corresponding to 0.3 neutralization equivalents with respect to hydrogen ions contained in the layered titanate) was added thereto, and then the mixture was stirred at room temperature for 1 hour to obtain a plate-shaped titanate dispersion.

A mesh having a sieve opening of 10 µm was attached to a slurry screener (specifically, "SS95 × 250" manufactured by ACO JAPAN CO., LTD.), and a solution obtained by diluting the obtained plate-shaped titanate dispersion 2 times with pure water was flowed at 18 L/hour to collect the plate-shaped titanate dispersion on the net.

The plate-shaped titanate dispersion on the net was diluted 3 times, and centrifuged in a centrifuge (specifically, "SJ10F" manufactured by Mitsubishi Kakoki Kaisha, Ltd.). The obtained precipitation (specifically, plate-shaped titanate cake) was spray-dried under the conditions of an inlet temperature of 190°C and an outlet temperature of 85°C by using a spray dryer (specifically, "L-8i" manufactured by Ohkawara Kakohki Co., Ltd.) to obtain "plate-shaped titanate powders A" as the plate-shaped titanate particles.

When the particle size of the "plate-shaped titanate powders A" was measured, the median size (D50) in the volume particle size distribution was 20.4 µm, the cumulative 10% particle size (D10) was 10.1 µm, and the cumulative 90% particle size (D90) was 39.1 µm. The measurement conditions are as follows.
Measuring apparatus: Laser diffraction/scattering type particle size distribution measuring apparatus (specifically, "LA-950" manufactured by HORIBA, Ltd.)
Refractive index: 2.50

### (Example 1)

### (1) Hydrous alumina treatment

The "plate-shaped titanate powders A" of the above production example was dispersed in pure water so as to have its solid content of 10% by mass to form a slurry, and the temperature of the slurry was raised to 90°C. Next, the pH of the slurry was adjusted to 7.0 by sulfuric acid (4.6 N), and then an aqueous sodium aluminate solution corresponding to 10% by mass in terms of Al₂O₃ conversion with respect to the plate-shaped titanate and sulfuric acid (1.1 N) were simultaneously added so that the pH of the slurry was maintained at 7.0 to 7.5 to neutralize sodium aluminate, and the mixture was further aged for 1 hour to treat the plate-shaped titanate with hydrous alumina (i.e., hydroxide of aluminum). The slurry was centrifuged at 10,000 rpm for 10 minutes to obtain "plate-shaped titanate cake B".

### (2) Treatment of anionic surfactant

20% by mass of lauryl phosphoric acid with respect to the plate-shaped titanate was dissolved in a mixed solution of pure water and ethanol in a mass ratio of 5:3, and the "plate-shaped titanate cake B" was mixed with this solution at room temperature so as to have its solid content of 15% by mass to form a slurry. After stirring for 30 minutes, the slurry was centrifuged at 10,000 rpm for 10 minutes to obtain the "plate-shaped titanate cake C". Next, pure water was added to the "plate-shaped titanate cake C" to prepare a slurry having its solid content of 5% by mass. The slurry was spray-dried under the conditions of an inlet temperature of 190°C and an outlet temperature of 85°C by using a spray dryer (specifically, "L-8i" manufactured by Ohkawara Kakohki Co., Ltd.) to obtain the powders of coated plate-shaped titanate particles of "Example 1".

### (Examples 2 and 3)

The powders of coated plate-shaped titanate particles of "Example 2" and the powders of coated plate-shaped titanate particles of "Example 3" were obtained in the same manner as in "Example 1" except that in the alumina treatment step of "(1) Hydrous alumina treatment" in "Example 1", the additive amount of the aqueous sodium aluminate solution was changed to 3% by mass or 6% by mass in terms of Al₂O₃ conversion.

### (Examples 4 and 5)

The powders of coated plate-shaped titanate particles of "Example 4" and the powders of coated plate-shaped titanate particles of "Example 5" were obtained in the same manner as in "Example 1" except that in the anionic surfactant treatment step of "(2) Treatment of anionic surfactant" in "Example 1", the additive amount of lauryl phosphoric acid was changed to 5% by mass or 10% by mass with respect to the plate-shaped titanate.

### (Example 6)

The powders of coated plate-shaped titanate particles of "Example 6" was obtained in the same manner as in "Example 1" except that in the alumina treatment step of "(1) Hydrous alumina treatment" in Example 1, the temperature of the slurry was raised to 60°C instead of 90°C.

### (Examples 7 to 9)

The powders of coated plate-shaped titanate particles of "Examples 7 to 9" were obtained in the same manner as in "Example 1" except that in the anionic surfactant treatment step of"(2) Treatment of anionic surfactant" in "Example 1", 10% by mass of 2-ethylhexyl acid phosphate (specifically, "JP-508" manufactured by Johoku Chemical Co., Ltd.), alkyl (C12, C14, C16, C18) acid phosphate (specifically, "JP-512" manufactured by Johoku Chemical Co., Ltd.), and isotridecyl acid phosphate (specifically, "JP-513" manufactured by Johoku Chemical Co., Ltd.) with respect to the plate-shaped titanate were each added instead of lauryl phosphoric acid.

### (Example 10)

In the anionic surfactant treatment step of"(2) Treatment of anionic surfactant" in "Example 1", 20% by mass of sodium lauryl phosphate with respect to the plate-shaped titanate was dissolved in pure water, instead of lauryl phosphoric acid, and the "plate-shaped titanate cake B" was mixed so as to have its solid content of 15% by mass to form a slurry. After stirring for 30 minutes, the slurry was centrifuged at 10,000 rpm for 10 minutes to obtain the "plate-shaped titanate cake D". Next, pure water was added to the "plate-shaped titanate cake D" to prepare a slurry having its solid content of 8% by mass. The slurry was spray-dried under the conditions of an inlet temperature of 190°C and an outlet temperature of 85°C by using a spray dryer (specifically, "L-8i" manufactured by Ohkawara Kakohki Co., Ltd.) to obtain the powders of coated plate-shaped titanate particles of "Example 10".

### (Examples 11 to 15)

The powders of coated plate-shaped titanate particles of "Example 11 to 15" were obtained in the same manner as in "Example 10" except that in the anionic surfactant treatment step of"(2) Treatment of anionic surfactant" in "Example 10", 10% by mass of sodium laurate, sodium lauryl sulfate, polyoxyethylene alkyl (12 to 15) ether phosphoric acid (specifically, "phosphanol (registered trademark) RS-710" manufactured by TOHO Chemical Industry Co., Ltd.), polyoxyethylene lauryl ether phosphoric acid (specifically, "phosphanol (registered trademark) RD-510Y" manufactured by TOHO Chemical Industry Co., Ltd.), and polyoxyethylene lauryl ether phosphoric acid (specifically, "phosphanol (registered trademark) RB-410" manufactured by TOHO Chemical Industry Co., Ltd.) with respect to the plate-shaped titanate were each added instead of sodium lauryl phosphate.

### (Examples 16 to 18)

The powders of coated plate-shaped titanate particles of "Examples 16 to 18" were obtained in the same manner as in "Example 1" except that in the anionic surfactant treatment step of "(2) Treatment of anionic surfactant" in "Example 1", 5% by mass of perfluoroalkyl acid salt (specifically, "SURFLON (registered trademark) S-211" manufactured by AGC Seimi Chemical Co., Ltd.), perfluorobutylsulfonic acid, and perfluoroalkyl phosphate ester (specifically, "FPE-50" manufactured by AGC Seimi Chemical Co., Ltd.) with respect to the plate-shaped titanate were each added instead of lauryl phosphoric acid.

### (Example 19)

The powders of coated plate-shaped titanate particles of "Example 19" was obtained in the same manner as in "Example 1" except that in the anionic surfactant treatment step of "(2) Treatment of anionic surfactant" in "Example 1", 0.05% by mass of perfluoroalkyl phosphate ester with respect to the plate-shaped titanate was added instead of lauryl phosphoric acid.

### (Comparative Example 1)

The "untreated plate-shaped titanate powders A" which is not subjected to the alumina treatment step of "(1) Hydrous alumina treatment" above and the anionic surfactant treatment step of "(2) Treatment of anionic surfactant" above was used as the sample of "Comparative Example 1".

### (Comparative Example 2)

Pure water was added to the "plate-shaped titanate cake B" to prepare a slurry having its solid content of 8% by mass. The slurry was spray-dried under the conditions of an inlet temperature of 190°C and an outlet temperature of 85°C using a spray dryer (specifically, "L-8i" manufactured by Ohkawara Kakohki Co., Ltd.). As a result, the sample of "Comparative Example 2" in which the particle surface of the plate-shaped titanate was treated with hydrous alumina (i.e., hydroxide of aluminum) (that is, the sample is not subjected to the anionic surfactant treatment step of"(2) Treatment of anionic surfactant" above) was obtained.

### (Comparative Example 3)

20% by mass of lauryl phosphoric acid with respect to the plate-shaped titanate was dissolved in a mixed solution of pure water and ethanol in a mass ratio of 5:3, and the "plate-shaped titanate powders A" was mixed so as to have its solid content of 15% by mass. After stirring for 30 minutes, the mixture was centrifuged at 10,000 rpm for 10 minutes to obtain the "plate-shaped titanate cake E". Next, pure water was added to the "plate-shaped titanate cake E" to prepare a slurry having its solid content of 8% by mass. The slurry was spray-dried under the conditions of an inlet temperature of 190°C and an outlet temperature of 85°C by using a spray dryer (specifically, "L-8i" manufactured by Ohkawara Kakohki Co., Ltd.). Thus, the sample of "Comparative Example 3" in which the particle surface of untreated (that is, the "untreated" means not to be subjected to the alumina treatment step of "(1) Hydrous alumina treatment" above) plate-shaped titanate was treated with lauryl phosphoric acid was obtained.

### (Comparative Example 4)

The sample of "Comparative Example 4" was obtained in the same manner as in "Example 10" except that in the anionic surfactant treatment step of"(2) Treatment of anionic surfactant" in Example 10, 20% by mass of tetrabutylphosphonium (i.e., cationic surfactant) was added instead of sodium lauryl phosphate.

### (Comparative Example 5)

0.05 g of n-octylamine was dissolved in 0.3 g of a butyl acetate/xylene (wherein the butyl acetate and the xylene are a mass ratio of 1:1) mixed liquid, and 0.50 g of the "plate-shaped titanate powders A" was added thereto and mixed. Thus, an organic solvent dispersion of plate-shaped titanate particles as the sample of "Comparative Example 5" was obtained.

**[Table 1]**

| | Hydrous alumina Treatment | | Surfactant treatment | | |
|---|---|---|---|---|---|
| | Treatment amount (% by mass) | Treatment temperature (°C) | Compound species | Carbon number | Treatment amount (% by mass) |
| Example 1 | 10 | 90 | Lauryl phosphoric acid | 12 | 20 |
| Example 2 | 3 | 90 | Lauryl phosphoric acid | 12 | 20 |
| Example 3 | 6 | 90 | Lauryl phosphoric acid | 12 | 20 |
| Example 4 | 10 | 90 | Lauryl phosphoric acid | 12 | 5 |
| Example 5 | 10 | 90 | Lauryl phosphoric acid | 12 | 10 |
| Example 6 | 10 | 60 | Lauryl phosphoric acid | 12 | 20 |
| Example 7 | 10 | 90 | 2-ethylhexyl acid phosphate | 8 | 10 |
| Example 8 | 10 | 90 | Alkyl (C12, C14, C16, C18) acid phosphate | 12 to 18 | 10 |
| Example 9 | 10 | 90 | Isotridecyl acid phosphate | 13 | 10 |
| Example 10 | 10 | 90 | Sodium lauryl phosphate | 12 | 20 |
| Example 11 | 10 | 90 | Sodium laurate | 12 | 10 |
| Example 12 | 10 | 90 | Sodium lauryl sulfate | 12 | 10 |
| Example 13 | 10 | 90 | Polyoxyethylene alkyl (12 to 15) ether phosphoric acid | 12 to 15 | 10 |
| Example 14 | 10 | 90 | Polyoxyethylene lauryl ether phosphoric acid | 12 | 10 |
| Example 15 | 10 | 90 | Polyoxyethylene lauryl ether phosphoric acid | 18 | 10 |
| Example 16 | 10 | 90 | Perfluoroalkyl acid salt | 6 | 5 |
| Example 17 | 10 | 90 | Perfluorobutylsulfonic acid | 4 | 5 |
| Example 18 | 10 | 90 | Perfluoroalkyl phosphate ester | 6 | 5 |
| Example 19 | 10 | 90 | Perfluoroalkyl phosphate ester | 6 | 0.05 |
| Comparative Example 1 | - | - | - | - | 0 |
| Comparative Example 2 | 10 | 90 | - | - | 0 |
| Comparative Example 3 | - | - | Lauryl phosphoric acid | 12 | 20 |
| Comparative Example 4 | 10 | 90 | Tetrabutylphosphonium | 4 | 20 |
| Comparative Example 5 | - | - | - | - | - |

### (Preparation of paint film for evaluation)

The powders of the coated plate-shaped titanate particles of "Examples 1 to 19" or the samples of "Comparative Examples 1 to 5" were each added as a pigment to a 20 ml screw tube bottle, and 6.9 g of an acrylic resin paint (specifically, the mixture of "nax (registered trademark) Admila (registered trademark) Alpha 280 adjusting clear" and "901 binder", manufactured by Nippon Paint Co., Ltd., in a mass ratio of 3.6:1) was further added thereto, so that "mass of pigment/mass of non-volatile content" ratio (which is referred to as "P/B" ratio) of the resin was set to 0.25. This was mixed for 5 minutes by means of a paint shaker to prepare a paint. The prepared paint was applied on a PET film (specifically, "Lumirror (registered trademark) T60" manufactured by Toray Industries, Inc.) by using an 8 mil doctor blade, and forced drying at 60°C for 30 minutes to prepare a paint film, whereby the paint films for evaluation of "Examples 1 to 19" and "Comparative Examples 1 to 5" were prepared.

### (Evaluation of silky feeling (dense feeling, particle feeling))

Each silky feeling of the prepared paint films was visually evaluated. As an index of the silky feeling, the two kinds of dense feeling and particle feeling were used. The dense feeling is a seamless and smooth design like silk. The dense feeling was scored on a 3-grade scale from 1 to 3 in order of dense feeling. The particle feeling is a design in which each particle glitters solely. The particle feeling was scored on a 3-grade scale from 1 to 3. Score "1" point is a design in which the particle feeling is not felt, and score "3" points are a design in which the glittering feeling is strong. Therefore, when each score of the dense feeling and the particle feeling is "1" point, the highest silky feeling is evaluated to be exhibited. The evaluation results are shown in Table 2. It could be confirmed that all of Examples 1 to 19 exhibit the highest silky feeling.

**[Table 2]**

| | Dense feeling | Particle feeling |
|---|---|---|
| Examples 1 to 19 | 1 | 1 |
| Comparative Example 1 | 3 | 3 |
| Comparative Examples 2 to 4 | 2 | 2 |
| Comparative Example 5 | 1 | 1 |

### (Evaluation of shading feeling)

A white base of the black-and-white chart paper was applied to each back surface of the prepared paint films, and a light source was irradiated from a direction of -45° by using a multi-angle colorimeter ("BYK-mac (registered trademark) i" manufactured by BYK), and lightness (L*) values of highlight (light receiving angle: 15°) and shade (light receiving angle: 110°) was measured. Each average L* was calculated from the results of the three times measurements, and the L^{∗}_{110°} of the shade was subtracted from the L^{∗}_{15°} of the highlight to calculate ΔL^{∗}, thereby evaluating shading feeling of each paint film. The evaluation results are shown in Table 3.

### (Evaluation of yellowing resistance)

The prepared paint films were irradiated with a black light having a light intensity of 3 mW/cm² for 24 hours by a black light fluorescent lamp (specifically, "FL20SBLB" manufactured by Panasonic Corporation). Thereafter, a base of the black-and-white chart paper was applied to each back surface of the prepared paint films, and a light source was irradiated from a direction of -45° by using a multi-angle colorimeter (specifically, "BYK-mac (registered trademark) i" manufactured by BYK), and chromaticity (b*) values of highlight (light receiving angle: 15°) and shade (light receiving angle: 110°) were measured. Average b^{∗}_{15°} was calculated from the results of the three times measurements, and the b^{∗}_{15°} before black light irradiation was subtracted from the b^{∗}_{15°} after black light irradiation to calculate Δb^{∗}_{15°}. In addition, Δb^{∗}_{110°} was calculated by obtaining average b^{∗}_{110°} from the results of the three times measurements and subtracting the b^{∗}_{110°} before black light irradiation from the b^{∗}_{110°} after black light irradiation to evaluate yellowing resistance. The evaluation results are shown in Table 3.

**[Table 3]**

| | Shading feeling | Degree of yellowing resistance | |
|---|---|---|---|
| | ΔL* | Δb^{∗}_{15°} | Δb^{∗}_{110°} |
| Example 1 | 61 | 0 | 1 |
| Example 2 | 52 | 0 | 1 |
| Example 3 | 62 | 0 | 1 |
| Example 4 | 58 | 0 | 1 |
| Example 5 | 66 | 0 | 1 |
| Example 6 | 41 | 0 | 1 |
| Example 7 | 61 | 0 | 1 |
| Example 8 | 65 | 0 | 1 |
| Example 9 | 65 | 0 | 1 |
| Example 10 | 61 | 0 | 1 |
| Example 11 | 55 | 0 | 1 |
| Example 12 | 55 | 0 | 1 |
| Example 13 | 55 | 0 | 1 |
| Example 14 | 61 | 0 | 1 |
| Example 15 | 63 | 1 | 2 |
| Example 16 | 63 | 0 | 1 |
| Example 17 | 44 | 0 | 1 |
| Example 18 | 58 | 0 | 1 |
| Example 19 | 44 | 1 | 1 |
| Comparative Example 1 | 15 | 0 | 1 |
| Comparative Example 2 | 22 | 1 | 1 |
| Comparative Example 3 | 34 | 0 | 1 |
| Comparative Example 4 | 27 | 1 | 1 |
| Comparative Example 5 | 57 | 2 | 4 |

As shown in Table 3, the coated plate-shaped titanate particles of each example were all treated with hydrous alumina (i.e., hydroxide of aluminum), and further treated with an anionic surfactant having a hydrocarbon group having 5 or more carbon atoms in a main chain of the anionic surfactant or a fluorine-based anionic surfactant having a fluoroalkyl chain having 4 or more carbon atoms in a main chain of the fluorine-based anionic surfactant. When a paint film was formed by using the coated plate-shaped titanate particles of each example as described above, it could be confirmed that the value of ΔL* was large (specifically, the value of ΔL* in this test system is 40 or more), and a sufficient shading feeling was exhibited even by visual observation. On the other hand, the values of Δb^{∗}_{15°} and Δb^{∗}_{110°} were sufficiently small (specifically, the values of Δb^{∗}_{15°} and Δb^{∗}_{110°} in this test system are both 2 or less), and it could be confirmed that yellowing of the paint film was reduced even by visual observation.

In addition, when comparing the results of "Example 1" and "Example 6", the higher the temperature at the time of the hydrous alumina treatment, the larger the value of ΔL^{∗}, and the better the visual shading feeling. This is understood as having been caused by the following reasons: the hydrous alumina more densely covered the surface of the plate-shaped titanate because the temperature during the treatment was high, and adsorption of the anionic surfactant was promoted, so that dispersion stability of the coated plate-shaped titanate particles in the organic solvent-based paint was further improved.

On the other hand, as shown in Table 3, in the case of using the following: the untreated plate-shaped titanate (i.e., "Comparative Example 1") which was not subjected to the alumina treatment step of "(1) Hydrous alumina treatment" above and the anionic surfactant treatment step of "(2) Treatment of anionic surfactant" above; the plate-shaped titanate (i.e., "Comparative Example 2") which was subjected to only the hydrous alumina treatment (that is, the plate-shaped titanate which was subjected to only the alumina treatment step of "(1) Hydrous alumina treatment" above and was not subjected to the anionic surfactant treatment step of "(2) Treatment of anionic surfactant" above); or the plate-shaped titanate (i.e., "Comparative Example 3") which was subjected to only the treatment with an anionic surfactant having a linear hydrocarbon group having 12 carbon atoms (that is, the plate-shaped titanate which was subjected to only the anionic surfactant treatment step of "(2) Treatment of anionic surfactant" above and was not subjected to the alumina treatment step of "(1) Hydrous alumina treatment" above), yellowing of the paint film hardly occurred, but the value of ΔL* was small (specifically, the value of ΔL* in this test system is less than 40), and it could be confirmed that visual shading feeling was not sufficient. As was in "Comparative Example 4", the same tendency was observed even when plate-shaped titanate treated with another surfactant (specifically, the surfactant which is cationic and of which linear moiety has 4 carbon atoms) was used in addition to the hydrous alumina treatment. This is understood as being caused by the following reasons: the particle surface of the plate-shaped titanate is not sufficiently hydrophobized by the treatment of Comparative Examples 1 to 4, and therefore the dispersion stability of the plate-shaped titanate particles in the organic solvent-based paint cannot be secured.

As was in "Comparative Example 5", when an organic solvent dispersion containing plate-shaped titanate and an amine compound having a long-chain hydrocarbon group was used, the value of ΔL* was large, and a sufficient shading feeling was exhibited even by visual observation, but the values of Δb^{∗}_{15°} and Δb^{∗}_{110°} were both large, and it could be confirmed that yellowing of the paint film occurred even by visual observation. This is understood as being caused by the reasons that the amine compound contained in the organic solvent dispersion causes yellowing of the paint film.

### (Preparation of paint for evaluation of adhesion)

3 g of the powders of the coated plate-shaped titanate particles of "Examples 16 to 19" as a pigment were each added into a 225 ml mayonnaise bottle, and 33.4 g of an acrylic resin paint (specifically, the mixture of "nax (registered trademark) Admila (registered trademark) Alpha 280 adjusting clear" and "901 binder", of which both are manufactured by Nippon Paint Co., Ltd., in a mass ratio of 3.6:1) was further added thereto, so that "mass of pigment/mass of non-volatile content" ratio ("PB" ratio) of the resin was set to 0.25. This was mixed for 5 minutes by means of a paint shaker, and then the paint viscosity was adjusted with a thinner (specifically, "nax (registered trademark) Admila (registered trademark) Alpha 500 standard thinner" manufactured by Nippon Paint Co., Ltd.) so as to be 10 seconds with a viscosity cup (specifically, "NK-2 cup" manufactured by ANEST IWATA Corporation). A curing agent (specifically, "nax (registered trademark) Ultra Hardener" manufactured by Nippon Paint Co., Ltd.) was added thereto to prepare a paint for evaluation of adhesion.

### (Preparation of paint film for evaluation of adhesion)

The surface of a 35 mm × 150 mm × 0.8 mm steel plate was polished with sandpaper (#400), and then an acrylic urethane resin paint (specifically, the mixture of "nax (registered trademark) Urethane Prasuf Pro V1 White", "nax (registered trademark) #20 Ultra Hardener Standard Type", "nax (registered trademark) Multi #20 Standard Urethane Thinner NEO (2 stones)", all of which are manufactured by Nippon Paint Co., Ltd., in a mass ratio of 10: 1.5:3) was applied so as to have a paint film thickness of 50 µm by means of a spray gun (specifically, "KIWAMI-1-14KP6") manufactured by ANEST IWATA Corporation under the conditions of the following: an air adjusting gauge pressure is 0.15 MPa; its discharge volume adjustment knob is loosened two turns; its air volume adjustment knob is fully opened; and its pattern adjustment knob is fully opened. After setting for 10 minutes or more, the resultant was forced drying at 60°C for 40 minutes, and then polished with sandpaper (#400). Next, the above paint for evaluation of adhesion was applied so as to have a paint film thickness of 30 µm by means of a spray gun (specifically, "W-101-138BGC") manufactured by ANEST IWATA Corporation under the conditions of the following: an air adjusting gauge pressure is 0.15 MPa; its discharge volume adjustment knob is loosened 1.5 turns; its air volume adjustment knob is fully opened; and its pattern adjustment knob is fully opened, and after setting for 30 minutes or more, the resultant was forced drying at 60°C for 30 minutes. Thereto was applied a clear paint (specifically, the mixture of "Retan (registered trademark) PG80III026 clear", "Retan (registered trademark) PG80III026 clear curing agent", and "Retan (registered trademark) PG thinner standard form", all of which are manufactured by Kansai Paint Co., Ltd., in a mass ratio of 10:1:4) so as to have a paint film thickness of 40 µm by means of a spray gun (specifically, "KIWAMI-1-14KP6") manufactured by ANEST IWATA Corporation under the conditions of the following: an air adjusting gauge pressure is 0.15 MPa; its discharge volume adjustment knob is loosened two turns; its air volume adjustment knob is fully opened; and its pattern adjustment knob is fully opened. After setting for 30 minutes or more, the resultant was forced drying at 60°C for 12 hours to prepare a paint film for evaluation of adhesion.

### (Evaluation of adhesion)

The adhesion of the paint film was evaluated by a cross-cut test. A cutter knife is vertically applied on the paint film surface for evaluation of adhesion, eleven parallel lines at equal intervals reaching a base material are drawn, eleven parallel lines at equal intervals intersecting these parallel lines are drawn, and 100 squares surrounded by four straight lines are drawn. The distance between the parallel lines is 2 mm. When the adhesive tape (specifically, "Nichiban Cellotape (registered trademark) L Pack 24" manufactured by Nichiban Co., Ltd.) was cut into squares of the test piece, the test piece was uniformly pressure-bonded so as not to include air bubbles on the surface. One end of the adhesive tape was held, and the tape was peeled off from the test piece in a direction of 45° from the perpendicular surface of the paint film. The number of squares in which the peeling of the paint film was 50% or less inside a 2 mm square was examined to evaluate initial adhesion. The value of the initial adhesion means that the larger the value thereof, the better the adhesion.

Next, pure water was placed in a constant temperature water bath and kept at 40°C so that 1/2 or more of the steel plate on which the paint film was formed was immersed in water. After 168 hours of immersion, the test piece was taken out from the water bath, and after wiping off water droplets and contaminants with a cloth (specifically, waste cloth) or the like and leaving the test piece to stand for 12 hours, a cross-cut test was carried out in the same manner. The results are shown in Table 4.

**[Table 4]**

| | Cross-cut test results | |
|---|---|---|
| | Initial adhesion | Water-resistant adhesion (at 40°C for 168 hours) |
| Example 16 | 100/100 | 98/100 |
| Example 17 | 100/100 | 80/100 |
| Example 18 | 100/100 | 100/100 |
| Example 19 | 100/100 | 96/100 |

As shown in Table 4, it could be confirmed that the paint film formed by using the coated plate-shaped titanate particles treated with hydrous alumina (i.e., hydroxide of aluminum) and a fluorine-based anionic surfactant having 4 or more carbon atoms in a main chain of the fluorine-based anionic surfactant showed high initial adhesion to the substrate and water-resistant adhesion.

From the above, it can be seen that the coated plate-shaped titanate particles of the above Examples of the present specification are treated with hydrous alumina (i.e., hydroxide of aluminum), and further treated with an anionic surfactant having 5 or more carbon atoms in a main chain of the anionic surfactant or a fluorine-based anionic surfactant having a fluoroalkyl chain having 4 or more carbon atoms in a main chain of the fluorine-based anionic surfactant, so that in an organic solvent-based paint using the above coated plate-shaped titanate particles, both the "sufficient silky feeling and shading feeling" and the "excellent yellowing resistance" can be achieved.

In particular, as for coated plate-shaped titanate particles treated with a fluorine-based anionic surfactant having a fluoroalkyl chain having 4 or more carbon atoms as a main chain, adhesion to a substrate and water resistance can be secured by a paint film formed by using the coated plate-shaped titanate particles.

### INDUSTRIAL APPLICABILITY

According to the present invention, it is possible to apply the plate-shaped titanate to the organic solvent-based paint, and a design paint film with good silky feeling and shading feeling can be realized. Moreover, discoloration (i.e., yellowing) of the paint film is sufficiently reduced even when the paint film is placed under a relatively severe environment such as exposure to ultraviolet light for a long time. Therefore, by using the coated plate-shaped titanate particles according to the present invention by being blended particularly in an organic solvent-based paint, an article having an unconventional unique design feeling can be practically provided.

## Claims

1. Coated plate-shaped titanate particles, wherein an oxide and/or hydroxide of aluminum and an anionic surfactant exist on a particle surface of a plate-shaped titanate.

2. The coated plate-shaped titanate particles according to claim 1, wherein the anionic surfactant is a hydrocarbon-based anionic surfactant having 5 or more carbon atoms in a main chain of the hydrocarbon-based anionic surfactant and/or a fluorine-based anionic surfactant having 4 or more carbon atoms in a main chain of the fluorine-based anionic surfactant.

3. The coated plate-shaped titanate particles according to claim 1 or 2, wherein the anionic surfactant exists on the oxide and/or hydroxide of aluminum on the particle surface of the plate-shaped titanate.

4. The coated plate-shaped titanate particles according to any one of claims 1 to 3, wherein a contained amount of the anionic surfactant is from 0.01% by mass or more to 30% by mass or less with respect to the plate-shaped titanate.

5. The coated plate-shaped titanate particles according to any one of claims 1 to 4, wherein the contained amount of the oxide and/or hydroxide of aluminum is from 1% by mass or more to 30% by mass or less in terms of Al₂O₃ conversion with respect to the plate-shaped titanate.

6. A design pigment comprising the coated plate-shaped titanate particles according to any one of claims 1 to 5.

7. An organic solvent dispersion comprising the coated plate-shaped titanate particles according to any one of claims 1 to 5 and an organic solvent.

8. A paint composition comprising the coated plate-shaped titanate particles according to any one of claims 1 to 5 and a resin component.

9. A plastic composition comprising the coated plate-shaped titanate particles according to any one of claims 1 to 5 and a resin component.

10. A method for producing coated plate-shaped titanate particles, comprising a step of mixing, in a solution, a plate-shaped titanate in which an oxide and/or hydroxide of aluminum exists on a particle surface of the plate-shaped titanate with an anionic surfactant.

11. The method according to claim 10, wherein a hydrocarbon-based anionic surfactant having 5 or more carbon atoms in a main chain of the hydrocarbon-based anionic surfactant and/or a fluorine-based anionic surfactant having 4 or more carbon atoms in a main chain of the fluorine-based anionic surfactant are used as the anionic surfactant.

12. The method according to claim 10 or 11, comprising a step of making the oxide and/or hydroxide of aluminum exist on the particle surface of the plate-shaped titanate, wherein the step includes maintaining a temperature of an aqueous slurry containing particles of the plate-shaped titanate and an aluminum source at a temperature from 50°C or more to 95°C or less, and maintaining the aqueous slurry at a pH from 5 or more to 12 or less.
